Europäisches Patentamt

(19) European Patent Office

Office européen des brevets

(11) EP 1 316 952 A1

(12) **EUROPEAN PATENT APPLICATION**

(43) Date of publication:
04.06.2003 Bulletin 2003/23

(51) Int Cl.⁷: **G11B 7/26**, B29C 63/02, B32B 31/20

(21) Application number: 01128660.6

(22) Date of filing: 30.11.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **3M Innovative Properties Company St. Paul, Minnesota 55133-3427 (US)**

(72) Inventors:
• **Schoeppel, Wolfgang**
**41470 Neuss (DE)**
• **Schull, Wilfried**
**50825 Köln (DE)**

(74) Representative: **Wilhelm, Stefan M. et al**
**Office of Intellectual Property Counsel,**
**c/o 3M Deutschland GmbH,**
**Carl-Schurz-Strasse 1**
**41453 Neuss (DE)**

(54) **Method for preparing an optical storage medium**

(57) The present invention relates to a method for preparing an optical storage medium (44) from which information can be read out and/or into which information can be recorded with a light beam (9), said optical storage medium comprising one or more base members (7), one or more information storage layers (11) and at least one-light-transmissive optically clear film (3) wherein such transmissive optically clear films (3) are bonded to each other, to the surface of the base member (7) on which the light beam (9) is incident and/or to one or more of the information storage layers (11) by means of one or more light-transmissive pressure sensitive adhesive layers (2), said method comprising the steps of:

(i) providing at least one base member (7),

(ii) providing a light-transmissive multilayer film (1) comprising a continuous light-transmissive pressure-sensitive adhesive film (2) and a continuous optically clear film (3), the exposed surface of said continuous optically clear film (3) being optionally releasably adhered to a continuous protective film (5) and/or the exposed surface of said light-transmissive pressure-sensitive adhesive film optionally being releasably adhered to a continuous release liner (4),

(iii) optionally removing the continuous release liner (4), and

(iv) laminating the light-transmissive continuous multilayer films (1) to each other, to the surface of the base members (7) on which the light beam (9) is incident and/or to one or more information storage layers (11) whereby the lamination conditions are selected so that the elongation of the multilayer film (1), the continuous release liner (4) and/or the continuous protective film (5) prior to and/or during the lamination is less than 0.6 %,

(iv) cutting said one or more multilayer films (1) so that their shape substantially corresponds to that of said base members (7).

EP 1 316 952 A1

Fig. 3

**Description**

Field of the invention

The present invention refers to a method for preparing an optical storage medium from which information can be read out and/or into which information can be recorded with a light beam, said optical storage medium comprising one or more base members, one or more information storage layers and at least one-light-transmissive optically clear film wherein such transmissive optically clear films are bonded to each other, to the surface of the base member on which the light beam is incident and/or to one or more of the information storage layers by means of one or more light-transmissive pressure sensitive adhesive layers. The present invention refers further to a laminator suitable for carrying out the method according to the present invention.

Background of the invention

DVR discs exhibit a high storage capacity which renders them useful for digital recording and storage.
Typical constructions and formats of DVR discs are described, for example, in EP 0,729,141, EP 0,867,873 and EP 0,874,362.
Discs, in particular DVR's, generally comprise a disc-shaped substrate or base member exhibiting on one or both major surfaces an information storage layer comprising areas, capable to store or to be prerecorded with information. Preferably the information storage layer comprises a structure of lands and grooves. The disc achieved by the process of the present invention, preferably DVR discs, further comprise a light-transmissive optically clear film which is applied, for example, to the information storage layer on one or both sides of the base member.
It is disclosed in EP 0,867,873 that a light-transmissive optically clear layer can be obtained by spin-coating a liquid ultraviolet-curable resin onto the information storage layer with subsequent curing.
While light-transmissive optically clear layers obtained by such technique tend to exhibit a low surface roughness and advantageous transmission properties, it is difficult to control the thickness variation of the resulting film.
Spin-coating of a liquid UV-curable resin with a low variation of the thickness of the liquid layer requires, for example, that the resin is dosed into the centre of the disc. If the liquid resin is applied off-centre a large variation of the thickness of the resulting spin-coated resin layer is obtained. Since typical DVR discs comprise a central hole removable pieces have to be attached to the disc to temporarily close the central hole during spin coating. Even when applying the liquid resin to the centre of the DVR disc it is difficult to obtain the required layer thickness variation up to the outer edge of the disc. The main problem is that the centrifugal force which is pushing the liquid adhesive from the centre of the disc to its circumference, linearly increases with the radius. Equilibrium is obtained from the action of the centrifugal force on the one side and the frictional force which is due to the viscosity of the liquid adhesive, on the other side. Due to the radius dependence of the centrifugal force it is very difficult to obtain a layer of constant thickness. It has been suggested to decrease the thickness variation by slightly increasing the diameter of the disc and obtaining the required size by die-cutting the DVR disc including the disc shaped base member after spin-coating and preferably UV curing. Die-cutting of the disc shaped member after curing is disadvantageous because this establishes an additional process step and may result in the formation of debris and/or introduce stress into the base member which translates into optical distortions of the light-transmissive layers. UV curing may also result in shrinkage and/or distortion of the UV-curable layer and in unfavourable heat generation upon curing.
The thickness variation introduced by the light-transmissive optically clear layer into the optical storage medium can be reduced by using a prefabricated light-transmissive optically clear film having a low thickness variation and adhering such film to the information storage layer by means of a thin spin-coated layer of a UV-curable liquid resin as is disclosed, for example, in EP 0,867,873. This method has, however, several disadvantages. Spin-coating of a liquid adhesive resin layer with a thickness of as low as, for example, 5 µm requires a considerable amount of time which renders the process unfavourable from an economic point of view. It is also difficult to avoid the formation of air bubbles in the spin-coated liquid adhesive resin layer which adversely affects the optical properties of the resulting optical storage medium.
It has furthermore been disclosed that optical storage media with advantageous properties and, in particular, with a low thickness variation and low jitter values can be obtained by bonding such media including prefabricated light-transmissive optically clear films having a low thickness variation, with one or more pressure-sensitive adhesive (PSA) layers. Such methods include, for example:

-   laminating a die-cut of a PSA film on top onto a disc-shaped base member and subsequently vacuum-bonding a die-cut of a light-transmissive optically clear film onto the PSA layer;
-   vacuum-bonding a die-cut of a PSA film onto a disc-shaped base member and subsequently vacuum-bonding of a light-transmissive optically clear film die-cut on top of the PSA layer;

- vacuum-bonding a die-cut of a PSA film and a light-transmissive optically clear film onto the information storage layer of the base member;
- pad-bonding a die-cut of a PSA film onto the base member and subsequently vacuum-bonding a die-cut of a light-transmissive optically clear film onto the PSA film;
- pad-bonding a die-cut of a PSA film onto a base member and subsequently pad-bonding a die-cut of a light-transmissive cover film on top of the PSA.

The pad-bonding method which has been disclosed, e.g., in EP 0,854,477, requires that the optical storage medium is subjected upon heating to pressure or pressure and heat in order to remove air bubbles from the PSA layer which result in scattering of light. The methods described above therefore have the drawback of requiring a vacuum bonding step or additional autoclaving step which renders such methods slow, time-consuming and difficult to apply in a fully automated mass production.

A further method and device for preparing an optical storage medium is disclosed in the patent application WO-A-00/77,782 wherein a transparent adhesive film which has adhesive on one side is applied onto a data carrier surface to be protected. A transparent protective layer which is termed as a PC tape, is subsequently applied to the non-adhesive side of the transparent adhesive film. This method of manufacturing has the drawback that it comprises at least two lamination steps.

It was therefore an object of the present invention to provide a method for preparing an optical storage medium which does not exhibit the shortcomings of the prior art or exhibits them to a lesser degree only and which is in particular useful in fully automated mass production processes.

It was furthermore an object of the present invention to provide a method for preparing an optical storage medium which does not comprise slow and/or difficult to handle production steps such as vacuum bonding steps and/or pad bonding steps. Other objects of the present invention are evident to those skilled in the art from the subsequent detailed specification.

Summary of the invention

The present invention relates to a method for preparing an optical storage medium from which information can be read out and/or into which information can be recorded with a light beam, said optical storage medium comprising one or more base members, one or more information storage layers and at least one light-transmissive optically clear film wherein such light-transmissive optically clear films are bonded to each other, to the surface of the base member on which the light beam is incident and/or to one or more of the information storage layers by means of one or more light-transmissive pressure sensitive adhesive layers, said method comprising the steps of:

(i) providing at least one base member,

(ii) providing a light-transmissive multilayer film comprising a continuous light-transmissive pressure-sensitive adhesive film and a continuous optically clear film, the exposed surface of said continuous optically clear film being optionally releasably adhered to a continuous protective film and/or the exposed surface of said light-transmissive pressure-sensitive adhesive film optionally being releasably adhered to a continuous release liner,

(iii) optionally removing the continuous release liner, and

(iv) laminating the light-transmissive continuous multilayer films to each other, to the surface of the base members on which the light beam is incident and/or to one or more information storage layers whereby the lamination conditions are selected so that the elongation of the multilayer film, the continuous release liner and/or the continuous protective film prior to and/or during the lamination is less than 0.6%, and

(v) cutting said one or more multilayer films so that their shape substantially corresponds to that of said base members.

The multilayer film is preferably laminated to the surface of an information storage layer of an optical storage medium on which the light beam is incident whereby such information storage layer is attached, e. g., to the surface of the base member on which the light beam is incident.

The cutting of the multilayer film is so that its shape substantially corresponds to that of the base member and/or information storage layer and is preferably carried out by so-called Kiss cutting techniques which allow to control the depth of cutting. Especially preferred is cutting by means of a laser beam or by punching means.

The present invention furthermore relates to a method for preparing an optical storage medium from which information can be read out and/or into which information can be recorded with a light beam, said optical storage medium comprising one or more base members, one or more information storage layers and at least one-light-transmissive optically clear film wherein such transmissive optically clear films are bonded to each other, to the surface of the base member on which the light beam is incident and/or to one or more of the information storage layers by means of one or more light-transmissive pressure sensitive adhesive layers, said method comprising the steps of:

(i) providing at least one base member,

(ii) providing die-cuts of a light-transmissive multilayer film comprising a light-transmissive pressure-sensitive adhesive film and a light-transmissive optically clear film, the optically clear film of said die-cuts being releasably adhered to a continuous protective transport film and/or the surface of the light-transmissive PSA film being releasably adhered to a continuous release liner,

(iii) adjusting the relative position of the die-cuts of the multilayer film with respect to another die-cut of a multilayer film, to the surface of the base members on which the light beam is incident and/or to one or more information storage layers,

(iv) optionally removing the continuous release liner, and

(v) laminating the individual die-cuts of the light-transmissive multilayer film with their respective pressure-sensitive adhesive surface side to another die-cut of the mulitlayer film, to the surface side of the base members on which the light beam is incident and/or to one or more information storage layers, whereby the lamination conditions are selected so that the elongation of the multilayer film, of the continuous protective film and/or the continuous release liner prior and/or during lamination are less than 0.6%.

Brief description of the drawings

In the following preferred embodiments of the present invention will be described with reference to the drawings, in which:

*Figure 1* shows the construction of a light-transmissive multilayer film of individual die-cuts sandwiched between a continuous protective film and a continuous release liner;

*Figures 2a and 2b* show two different embodiments of an optical storage medium which can be manufactured by the method according to the present invention, wherein in the embodiment of Figure 2a a single information storage layer is provided, and wherein in the embodiment of Figure 2b two information storage layers are provided, one on the substrate and the other on the inner surface of the light-transmissive optically clear film;

*Figure 3* schematically shows a first embodiment of a laminator according to the present invention;

*Figure 4* schematically shows a second embodiment of a laminator of the present invention;

*Figure 5* schematically shows an enlarged detail X of the laminator of Fig. 4;

*Figure 6* schematically shows a third embodiment of the laminator according to the present invention.

Detailed description of the present invention

As used herein, the term "tape" refers to a continuous light-transmissive multilayer film comprising a light-transmissive pressure-sensitive adhesive film and a light-transmissive optically clear film, a continuous release liner which is in contact with the adhesive surface side of said pressure-sensitive adhesive film and a continuous protective film which is in contact with the surface side of said optically clear film, whereby the light-transmissive multilayer film can be continuous or in form of individual die-cuts.

As used herein, the terms "light-transmissive multilayer film" or "multilayer film" refer to continuous light-transmitting multilayer films and/or light-transmitting multilayer films comprising individual die-cuts.

As used herein, the term "information storage layer" preferably refers to information storage layers attached to a base member such as, e. g., a disc-shaped substrate.

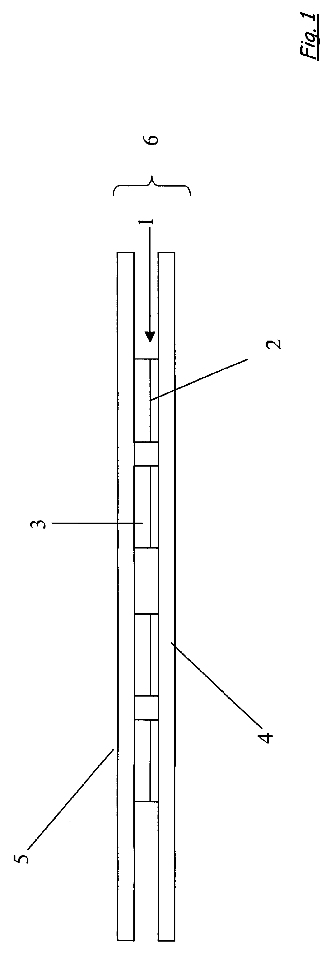

Fig. 1 shows a tape 6 comprising die-cuts of a light-transmissive multilayer film 1 consisting of a light-transmitting pressure-sensitive adhesive (PSA) film 2 and an optically clear film 3, a continuous release liner 4 which is in contact with the adhesive surface side of said pressure-sensitive adhesive film 2, and a continuous protective film 5 which is in contact with the surface side of said continuous optical clear film 3.

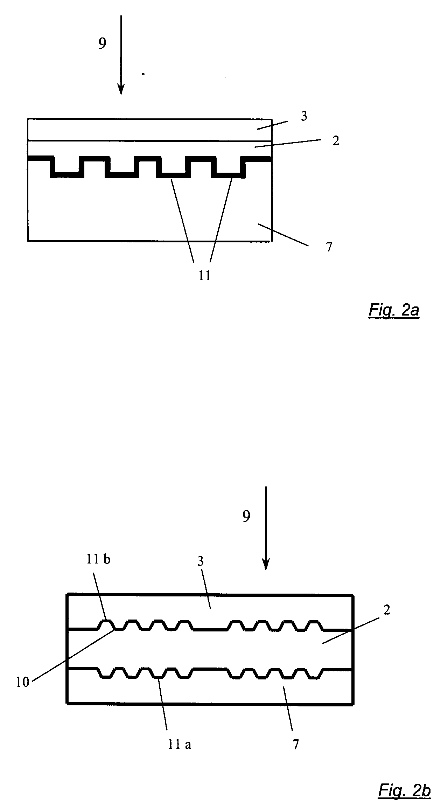

As shown in Figures 2a and 2b, the optical storage medium obtainable by the method of the present invention comprises at least one base member 7 bearing on a major surface thereof on which a light beam 9 is incident, one or more information storage layers 11 which may be readable and/or recordable, at least one light-transmissive pressure sensitive adhesive layer 2 and at least one light-transmissive cover film 3.

Fig. 2a shows as an example a schematic representation of a cross-sectional view of a specific embodiment of an optical storage medium obtainable by the method of the present invention, comprising a base member 7 exhibiting on its major surface on the side where the light beam 9 is incident upon, a structure of lands and grooves which forms part of the information storage layer 11. The information storage layer 11 bears a pressure-sensitive adhesive layer 2 to which the light-transmissive optically clear film 3 is bonded.

More complex constructions of optical storage media which may be useful in the present invention are described, for example, in EP-A-0,867,873 which is incorporated herein by reference. The optical storage media may comprise, for example, two or more information storage layers 11 arranged above each other on one or two, respectively, major surfaces of the substrate. The light-transmissive multilayer film 1 is, if desired, laminated onto such two or more information storage layers in subsequent steps. Fig. 2b schematically shows a construction comprising two information storage layers 11a, 11b applied to the inner surface of the base member 7 and the inner surface 10 of the light-transmissive optically clear film 3, respectively.

A format which is usually referred to as Ultra Density Optical (UDO) storage medium or disc, comprises, in the order given, a first optically clear film, a first pressure-sensitive adhesive layer, a first information storage layer, a first base member, an adhesive layer, a second base member, a second information storage layer, a second pressure-sensitive adhesive layer and a second optically clear film. The UDO format thus essentially comprises two optical storage media according to Fig. 2a whereby the outer surfaces of the two base members are bonded to each other, e. g., by an adhesive layer.

The base member 7 may be of any shape but preferably is a disc exhibiting a center hole useful for centering the assembled optical storage medium in a recording or playing station. The disc or annulus shaped substrates preferably have an outer diameter of about 10 to about 360 mm and an inner diameter of the center hole of about 5 to about 35 mm, and the thickness preferably is between 0.3 and 3.0 mm and especially preferably between 0.5 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmethacrylates, polycarbonates or thermally stable polyester carbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive layer and the depth of a groove in order to minimize optical crosstalk between consecutive lands and grooves are disclosed, for example, in EP-A-0,874,362 or EP-A-0,867,873 which are incorporated herein by reference. The track pitch which is the distance between the centerline of adjacent physical tracks as measured in radial direction is typically in the range of 0.3 to 1.6 $\mu$m, and more preferably between 0.3 - 0.65 $\mu$m.

The structure of pits can be molded into one or both, respectively, surfaces of the base member or members. This process, which is described in detail in EP-A-0,729,141, usually comprises a master disc-forming step and an injection molding step; EP-A-0,729,141 is incorporated herein by reference. It is also possible, however, that a structure of pits is obtained in the light-transmissive optically clear films by passing the light-transmissive optically clear film which is heated to a temperature above its glass transition temperature, between two rollers at least one of them exhibiting a patterned structure. This technique is disclosed in EP-A-0,867,873 where the light-transmissive optically clear film 3 is passed between a roll and a stamper. The light-transmissive optically clear film 3 thus obtained can be bonded to the base member 7 or to one or more other light-transmissive optically clear films 3 optionally bearing a structure of pits, by means of a pressure-sensitive adhesive layer 2 so that optical storage media having a multiplicity of information storage layers can be obtained.

The construction of the information storage layer 11 depends on whether it is to allow for read out and/or recording.

If the optical storage layer is of ROM type, the information storage layer 11 may comprise the structure of pits bearing a reflective film of Al, Au or the like with a thickness of typically between 20 - 60 nm which can be obtained, for example, by sputtering.

Re-writable optical storage media may be of phase-change type or magneto-optical type. According to EP-A-0,867,873 phase-change type information storage layers may be obtained by successively forming on the structure of pits a reflective film such as an Al film, a GeSbTe film and an $ZnS-SiO_2$ film. More complex phase-change type information storage layers are described, for example, in EP-A-0,874,362. Magnetooptical type information storage layers 11 comprise, for example, the structure of pits bearing a reflective film such as an Al film, a SiN film, a TbFeCo film and a SiN film in this order.

Information storage layers of write-once type (used in so-called recordable optical storage media) can be obtained, for example, by applying a thin reflective film of Al, Au or other metals to the structure of pits which is then coated with a cyanin or phthalocyanine system organic pigment film.

The information storage layers described above are given by way of example only. The optical storage media obtainable by the method of the present invention can comprise other and/or modified constructions of information storage layers.

It was found that optical storage media with a low thickness variation, advantageous optical properties and low jitter values can be obtained by bonding such media with one or more light-transmissive pressure-sensitive adhesive layers. The present invention thus refers to optical storage media which are bonded by one or more pressure-sensitive adhesive layers.

In the specific embodiment of the optical storage medium schematically shown in Fig.2a the pressure-sensitive adhesive layer 2 bonds the light-transmissive optically clear film 3 to the information storage layer 11. In more complicated constructions comprising a multiplicity of information storage layers as was described above, pressure-sensitive adhesive layers 2 can also be used to bond two or more light-transmissive optically clear films 3 optionally comprising an information storage layer 11 to each other.

Another optical storage medium which is obtainable by the method of the present invention comprises two or more information storage layers 11. In the specific embodiment of the optical storage medium schematically shown in Fig. 2b, the pressure-sensitive adhesive layer 2 bonds a base member 7 bearing a first information storage layer 11a to a second information storage layer 11b on a light-transmissive optically clear film 3 onto which the light beam 9 is incident upon.

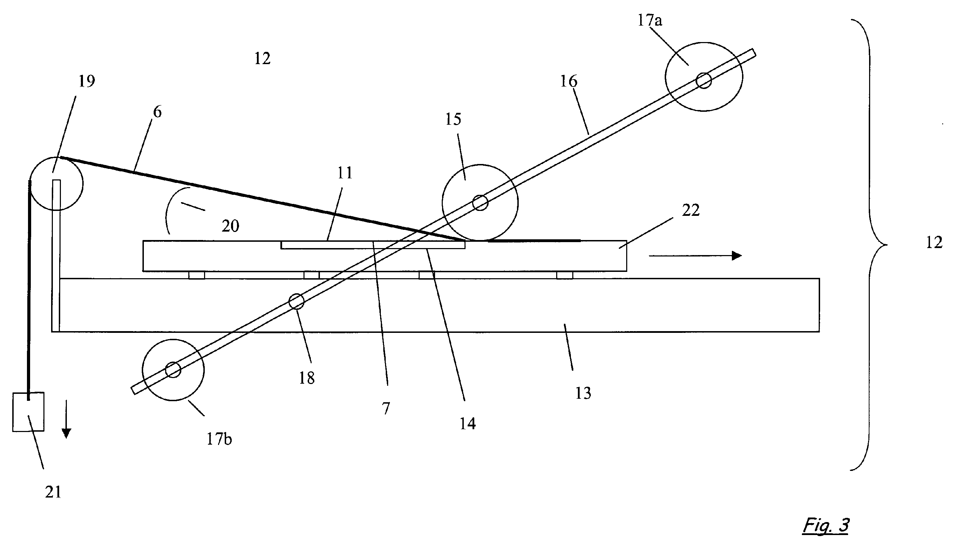

Fig. 3 shows a first embodiment of a laminator 12 comprising a fixed laminator stand 13 on which a movable lamination table 22 is mounted. The movable lamination table 22 has a cavity 14 which exactly fits to the outer shape of the optical disc 7. This keeps the disc 7 in a fixed place during the lamination procedure. The lamination roller 15 is connected to the stand 13 by a lever 16 which is fixed to the laminator stand 13 with a bearing 18. Weights 17a/17b on this lever 16 allow the adjustment of the lamination pressure by either increasing the pressure or lowering the pressure by different weights 17a and counter weights 17b and locations of the weight 17a and the counter weight 17b on the lever 16. A lamination angle application roll 19 which is adjustable in height allows the control of the lamination angle 20. The tension of the tape 6 is controlled by a tension application weight 21 which is fixed to the end of said tape strip 6.

The laminator shown in Fig. 3 is a laboratory scale device which is operated as follows:

The lamination angle 20, the pressure of the lamination roller 15 and the tape tension are adjusted to the desired values. A suitable piece of the tape 6 comprising a die-cut of such multilayer film 1 is aligned with the cavity 14 for the optical disc with the release liner 4 facing down. The continuous protective film 5 is then fixed to the movable lamination table 22 by means of a strip of pressure-sensitive adhesive tape on the right hand side of the optical disc cavity 14. The tape 6 is placed on the laminator according to the schematic drawing. The tensioning weight 21 is applied by means of a spring loaded clamp. Then the optical disc substrate 7 is placed into its cavity 14 with the information storage layer 11 being exposed.

Now the continuous release liner 4 is carefully removed from the section of tape 6 opposite to the information storage layer 11 in order to expose the light-transmissive pressure-sensitive adhesive film 2 of the die-cut of the multilayer film 1. The movable lamination table 22 is then pushed slowly to the right hand side in order to carry out the lamination. The protective film 5 is then removed from the multilayer film 1 laminated onto the disc 7.

An exact alignment of the die-cuts of the multilayer film 1 with respect to the movable lamination table 22 and an essentially stress-free and deformation-free lamination of the multilayer film 1 onto the information storage layer 11 is important in order to obtain high quality optical storage media. Any deformation of the multilayer film 1 leads to extremely high tilt values in the optical disc 7. Therefore an even distribution of load and tension over the entire width of the tape 6 comprising the multilayer film 1 is important. During lamination the optical disc 7 should be securely kept in place. This can be done by vacuum, applied through appropriate holes in the cavity and a vacuum pump system connected to those.

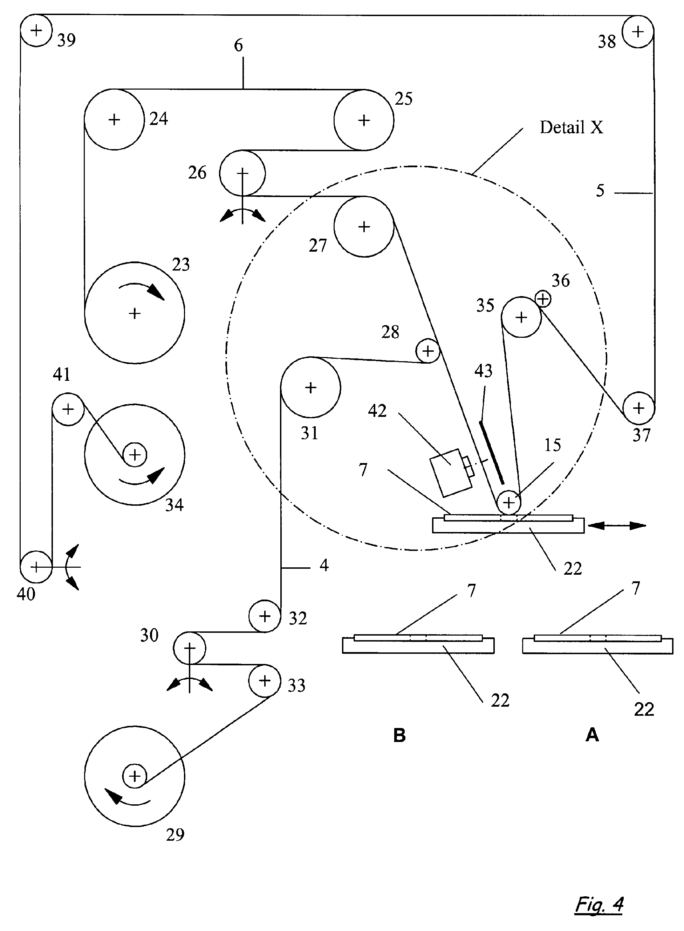

Fig. 4 shows another embodiment of a laminator useful for manufacturing optical storage media on an industrial scale. In the specific embodiment shown in Fig. 4, optical storage media having a construction as shown schematically in Fig. 2a, can be obtained. The tape 6 which is supplied from supply roll 23, comprises a multilayer film 1 which can be continuous or comprise individual die-cuts. The operation of the laminator of Fig. 4 is described in the following with respect to a multilayer film 1 comprising individual die-cuts. The construction of the tape 6 as stored on the supply roll 23 which is not shown in Fig. 4, corresponds to the construction shown in Fig. 1.

The continuous release liner 4 which is in contact with the adhesive surface side of the pressure-sensitive adhesive film 2 of the die-cut of the multilayer film 1, and the continuous protective film 5, which is in contact with the surface side of the optically clear film 3 of the die-cuts of the multilayer film 1, act as transport films for said die-cuts of the multilayer film 1. The die-cuts of the multilayer film 1 which are sandwiched between said transport films 4, 5 are moved over two tape guide rollers 24, 25 to a tensioning mechanism 26, which keeps the tape 6 under an essentially uniform and constant tension. The tension applied to the tape 6 by tensioning mechanism 26 is preferably selected so that the elongation of said tape 6, its continuous release liner 4 and/or of its continuous protective film 5 is in the range of between 0 and ≤ 0.6 % during the bonding process. After passing another guide roller 27, the release liner 4 is removed at release liner removal roll 28. The release liner 4 is wound onto the release liner take-up roll 29 after passing the tensioning mechanism 30 and some tape guide rollers 31, 32, 33. The multilayer film 1 comprising individual die-cuts facing downwards with the PSA surface side being exposed, is moved to the lamination roller 15 where the light-transmissive multilayer film 1 is laminated with its pressure-sensitive adhesive surface side to the surface side of the information storage layer 11 of the optical disc substrate 7. Subsequent to the lamination step, the continuous protective film 5 is wound onto the take-up roll 34 after passing the drive mechanism consisting of two rolls 35, 36, some guide rollers 37, 38, 39, 41 and the tensioning mechanism 40. The tension between the lamination roller 15 and the drive rollers 35, 36 is controlled by adjusting the rotation speed of the drive rollers 35, 36 so that the speed of the protective film 5 essentially corresponds to the longitudinal speed of the lamination table 22. It is especially preferred that the tension of the tape between the tape tensioning mechanism 26 and the lamination roller 15 on the one hand and the tension between the lamination roller 15 and the drive rollers 35, 36 on the other hand essentially match each other. The tension applied to the continuous protective film 5 is selected so that the elongation of said continuous protective film 5 prior to and/or during the lamination step is between 0 and 0.6 %.

Prior to lamination, the lamination table 22 is in position A. An optical disc substrate 7 bearing an information storage layer 11 is placed on the lamination table 22 by means of any type of suitable handling device so that the information storage layer 11 is exposed. The disc then is securely kept in place by vacuum. Care is taken to achieve an exact positioning of the substrate 7 relative to the table 22 before vacuum is applied. The relative position of the die-cuts with respect to the lamination table 22 is adjusted by optical means 42. The lamination table 22 is then driven to a position where the first edge of the disc substrate 7 with its exposed information storage layer 11 is in a position aligned with the first edge of the die-cut of the light-transmissive multilayer film 1. The lamination table 22 is then moved upwards in a way that the continuous protective film 5 and the lamination table 22 are put in contact by the lamination roll 15 very close to the edge of the die-cut of the multilayer film 1 and/or the optical disc substrate 7, respectively. This avoids that the PSA layer 2 of the die-cut of the information storage layer 11 of the disc substrate 7 get into contact prior to the start of the lamination process.

The lamination table 22 is then moved in a controlled way to position A so that the contact line, which is created by the pressure applied by the lamination roller 15, moves firstly over the edges of the die-cut of the multilayer film 1 and the information storage layer 11 of the disc substrate 7, thus providing well controlled lamination conditions.

The relative position of the die-cuts with respect to the lamination table 22 is adjusted by optical means 42. The lamination table 22 can have a cardanic suspension which provides for a uniform pressure distribution parallel to the axis of the lamination roller 15 during lamination.

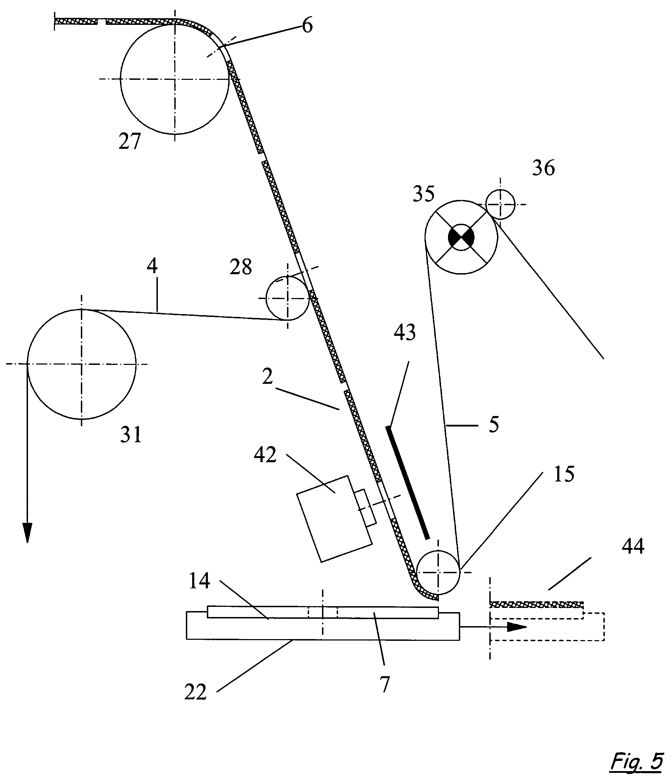

Fig. 5 shows a schematic enlarged view of the lamination area of the laminator of Fig. 4 (see broken-lined circle in Fig. 4). The adjustment of the die-cuts of the light-transmissive multilayer film 1 with their exposed pressure-sensitive adhesive surface side 2 with respect to the exposed surface side of the information storage layer 11 of the optical disc substrate, is performed using an illuminating camera 42 and a contrast improving black background panel 43. The camera output signal is processed by a computer system which positions the lamination table 22 into the exact transversal and longitudinal position.

After lamination the assembled optical storage medium or a precursor thereof is removed from the lamination table by any type of suitable handler.

Contrary to prior art techniques, the process of the present invention does not comprise vacuum or pad-bonding steps, respectively. Thus, the lamination of optical storage media according to the process of the present invention is a very simple, fast and effective process which is suitable for use under mass production conditions.

The laminator designs exemplified in Fig. 3 and 4 are only possible embodiments of the invention. It is preferred to apply, e. g., the laminator roller pressure by a cardanically suspended pneumatic piston and the tape tension by a force loaded dancer system. It is furthermore preferred that said lamination roller and/or said lamination table are suspended by a cardanic device in order to insure an uniform lamination force along the contact line between said laminating roller and said information storage layer 11 of the optical disc substrate.

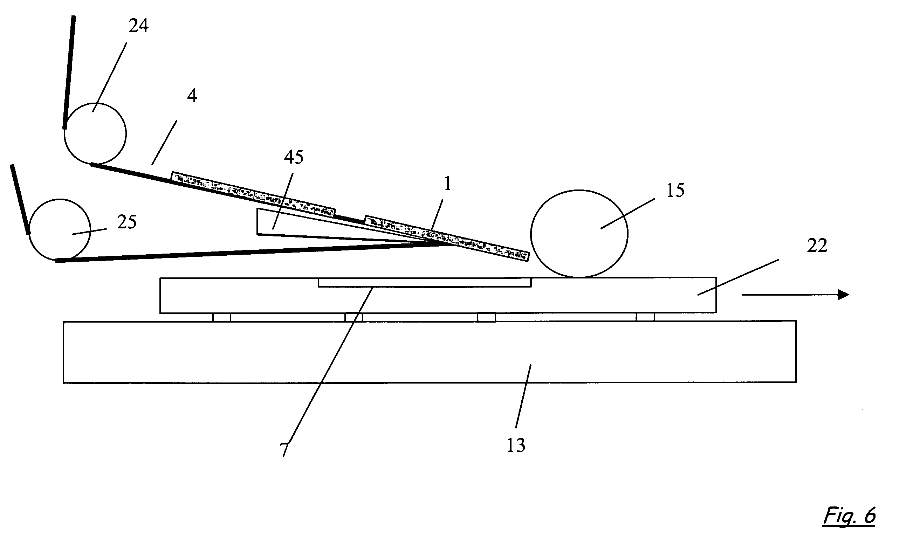

Fig. 6 shows another preferred embodiment of a laminator of the present invention. Here, the continuous protective film 5 is removed prior to the lamination and the individual die-cuts of the light-transmissive multilayer film 1 are separated from the continuous release liner 4 by means of a dispensing blade 45. By moving the lamination table 22 which is synchronized with the movement of the continuous release liner 4, the lamination roller 15 is laminating the die-cuts of the light-transmissive multilayer film 1 onto the exposed information storage layer 11 on the optical disc substrate.

In the laminator of Fig. 6, the protective film 5 is removed from said optically clear film 3 prior to the lamination step and wound onto a roll (not shown in Fig. 6).

Irrespective from the specific design of the laminator, it is essential that in the method and the laminator of the present invention, the elongation of the continuous multilayer light-transmissive film 1, the continuous protective film 5 and/or the release liner 4 before and/or during lamination is less than 0.6 %. Preferably, the elongation is between 0.05 % and < 0.6 %, more preferably between 0.05 % and 0.5 % and especially preferably between 0.05 % and 0.25 %. Ideally the elongation would be 0.

The elongation is an essential feature of the present invention and has to be kept exactly within the above range in order to obtain optical recording media with advantageous properties and, in particular, a high overall flatness of the optical recording media. DVRs comprising one information storage layer as exemplified, e. g., in Fig. 2a, can be obtained with only one lamination step which further assists in increasing the overall flatness. It was found that during the lamination step of the method according to the present invention, essentially no air bubbles and/or air bubbles having an acceptable number and size are included between the multilayer film 1 and the surface it is laminated to, so that a subsequent autoclaving step is not required. It is preferred to perform the lamination step under clean room conditions.

It is preferred that the light-transmissive multilayer film 1 irrespective of whether supplied as a continuous film or in the form of separate die-cuts comprises centered holes which substantially correspond in size and shape to the hole of said information storage layer 11 of the optical disc substrate 7.

The average tension applied to the continuous protective film 5, the continuous release liner 4 and/or to the multilayer film 1 prior and/or during the lamination needs to be controlled and is preferably between 0.1 to 10 N/mm$^2$. Film tension can be controlled by means such as dancer systems or friction rollers. It is important that an exact web guiding and/or steering system provides a uniform tension in cross-direction of the multilayer film 1, the continuous protective film 5 and/or the release liner 4 before and/or during lamination. The deviation from the average tension at certain locations in cross-direction should be as low as possible in order to avoid distortions of the laminated disc. The tension providing apparatus is preferably selected so that the average tension in cross-direction deviates from the above values by less than ± 20 % and more preferably by not more than ± 10 %.

In a preferred embodiment of the process of the present invention tension force is adjustable by film tension application means.

Further, the lamination angle between the continuous protective film 5, the release liner 4 and/or the multilayer film and the surface onto which the multilayer film 1 is laminated, preferably is between 4° to 90° and more preferably between 5° and 30°.

The lamination angle can be adjustable by lamination angle application means.

In a further preferred embodiment of the process of the present invention the multilayer film 1, the continuous protective film 5 and/or the continuous release liner 4 are subjected during lamination to an average lamination force of between 1 N - 200 N. The lamination force corresponds, e. g., in the laminator of Fig. 3 to the weight of the tension application weights. It is preferred that the lamination force is adjusted such that a lamination line force of between 0,04 N/mm to 40 N/mm is applied during the lamination step. The line force is defined as the lamination force over the extension of the multilayer film 1 in cross-direction. The uniformity of the lamination force in cross-direction of the multilayer film 1 can be increased by using a lamination roll and/or a lamination table having some freedom to move into a parallel position. A cardanic suspension of the lamination table and/or of the lamination roll is preferred. A rigid mechanical adjustment is not preferred because of small thickness variations and/or surface irregularities of the optical disc substrate and/or of the multilayer film 1, the continuous release liner 4 and/or the continuous protective film 5.

In one aspect of the invention a rotating lamination roller 15 is used to press said multilayer film 1, preferably with said continuous protective film 5, onto said information storage layer 11 to laminate the adhesive surface side of the PSA layer 2 to said information storage layer 11. Preferably the lamination roller used has a shore A hardness of between 30 to 80. The contact pressure of the lamination roller 15 to the multilayer film 1 preferably is adjustable by lamination pressure application means.

It is preferred that the individual die-cuts of the multilayer film 1 have a shape substantially covering the data area of said information storage layer 11 of the optical disc substrate 7.

The continuous protective film 5 can be removed during or after lamination.

The thickness of said continuous protective film 5 can preferably is from about 20 μm to 100 μm and the thickness of the continuous release liner 4 preferably is from about 20 μm to 100 μm.

The thickness of the optically clear film 3 preferably is from about 5 μm to 200 μm, more preferably of between 50 μm and 120 μm and especially preferably of between 70 μm and 90 μm.

In a preferred aspect of the present invention the optical disc substrate 7 bearing the information storage layer 11 is releasably fixed on a lamination table 22. The lamination table 22 including the optical disc substrate 7 and the lamination roller 15 are preferably movable with respect to each other.

In another preferred aspect of the present invention the output of the optical means 42, preferably a camera output signal, is processed by a computer system, which positions the lamination table 22 into the exact transversal and/or longitudinal position with respect to, e. g., the die-cuts of the multilayer film 1. Further, the disc substrate bearing the information storage layer can be placed on the upper surface of the lamination table releasably fixed in a cavity, whereby the shape of the cavity is chosen so that the information storage layer fits into the cavity. Preferably, said disc substrate 7 bearing the information storage layer 11 is releasably fixed to the lamination table 22, for example by application of vacuum.

To achieve an exact pre-determined position of the said disc substrate 7 bearing the information storage layer 11, the substrate is centered on the lamination table, for example, by means of a centering pin.

During the lamination of the multilayer film 1, the lamination table 22 and /or the multilayer film 1 are preferably moved to provide a relative speed of the multilayer film 1 with respect to the lamination table 22 of between 1 mm/sec to 200 mm/sec.

In accordance with a further aspect of the present invention a laminator is provided comprising:

- a lamination table 22 suitable for receiving a base member 7,
- a supply roll 23 for a continuous multilayer film 1 or the die-cuts of such multilayer film 1, respectively, releasably adhered to a continuous protective film 5 and/or to a continuous release liner 4,
- optionally means 28 for removing said continuous release liner 4 prior to lamination,
- a lamination roller 15 to press said continuous multilayer film 1 or said die-cuts, respectively, onto other die-cuts of said multilayer film 1, to the surface of the base member 7 on which the light beam is incident and/or to one or more of the information storage layers 11,
- film tension application means 21, 26 allowing adjustment of the elongation of said multilayer film 1, said protective film 5 and/or said release liner 4 prior to and/or during lamination in the range of between 0 and 0.6%, and
- cutting means for cutting said continuous multilayer film 1 subsequent to the lamination substantially to the shape of said base members 7 or means for adjusting the relative position of the die-cuts of the multilayer film 1 prior to the lamination with respect to another die-cut of a multilayer film 1, to the surface of the base members 7 on which the light beam is incident and/or to one or more information storage layers 11.

It is preferred that said laminator comprises a dancer system and/or a friction roller to adjust the tension of the multilayer film 1, the continuous protective film 5 and/or the continuous release liner 4. Further, the laminator preferably comprises optical means 42 to position the lamination table 22 into the exact transversal and/or longitudinal position for an exact placement of the multilayer film 1 and/or said individual die-cuts with respect to another die-cut of a multilayer film 1, to the surface of the base members 7 on which the light beam is incident and/or to one or more information storage layers 11.

The lamination table 22 preferably has a cavity to receive the optical disc substrate 7 bearing the information storage layer 11, vacuum means to releasably fix said optical disc substrate 7 in said cavity and/or a centering device, preferably a pin, to center said disc.

The lamination roller 15 preferably has a diameter of between 20 mm to 80 mm.

In a further embodiment of the present invention said laminator comprises pressure means, weight means, hydraulic means, pneumatic means and/or electric devices to adjust the pressure of said lamination roll 15 and/or means for adjusting the tension of the multilayer film 1, the continuous release liner 4 and/or the continuous protective film 5. The tension application means preferably comprises a dancer device and/or friction rollers.

The laminator according to the present invention can furthermore comprise a dispensing blade 45 and/or roller means to remove said continuous release liner 4 and/or said continuous protective film 5.

The pressure-sensitive adhesive layer is required to be optically transparent or light-transmissive at the wavelength of the incident light beam with which the information is read out from and/or recorded into the optical storage medium. Suitable light sources to generate light beam comprise lasers having, for example, emission lines in the wavelength range of between 400 - 700 nm and preferably of between 600 - 660 nm for red lasers and 400 - 420 nm for blue lasers. It is also possible to use polychromatic light sources with appropriate monochromatic filters such as interference filters. The optical transparency or light-transmission of the pressure-sensitive adhesive at the wavelength of the incident light which can be measured, for example, according to ASTM D 1746, preferably is at least 80 % and more preferably at least 85 %.

The pressure-sensitive adhesive layer of the light-transmissive multilayer film preferably has an average thickness of between 10 - 100 $\mu$m, more preferably, of between 15 - 80 $\mu$m, and especially preferably of between 15 - 50 $\mu$m.

The optical transparency requirements are generally fulfilled by acrylate-based pressure-sensitive adhesives, but silicone-based pressure-sensitive adhesives, rubber resin-based pressure-sensitive adhesives, block copolymer-based adhesives, especially those comprising hydrogenated elastomers, or vinylether polymer-based pressure-sensitive adhesives can also be used. Any of these materials may be compounded with plasticizers and/or tackifiers to tailor their properties. Acrylate-based pressure-sensitive adhesives are preferred.

Acrylate-based pressure-sensitive adhesives which are useful in the present invention can be obtained by polymerization of precursors comprising one or more alkyl acrylates the alkyl groups of which have an average of 4 - 14 atoms. The term average of 4 - 14 atoms means that the average number of carbon (C) atoms of the alkyl acrylate compounds is between 4 - 14 and, in particular, between 4 - 12 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2-ethylhexyl acrylate, isononyl acrylate and dodecyl acrylate. The polymerizable precursor of the pressure-sensitive adhesive preferably contains up to 5 and, in particular, 1 - 4 alkyl acrylates. The average number of carbon atoms in the alkyl groups of the alkyl acrylates as defined above, preferably is between 4 - 12 and very particularly between 5 - 10. Blends of different alkyl acrylates may also be used.

The polymerizable precursor of the pressure-sensitive adhesive can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the pressure-sensitive adhesive can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269- 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene. It was found, however, that when the inner surface of at least one of the members comprises a corrosive layer such as, for example, an Al reflective layer, the percentage of strongly polar monomers is preferably less than about 10 % by weight and, more preferably, less than about 5 % by weight with respect to the mass of the acrylate monomers. The pressure-sensitive adhesive should preferably be essentially free of acrylic acid in order to avoid severe damaging of the inner surface of the members by corrosion.

Acrylate-based pressure-sensitive adhesives which are useful in the present invention are described, for example, in US 4,181,752, US 4,418,120, WO 95/13,331 or in Handbook of Pressure-sensitive Adhesive Technology; D. Satas ed.; Second Edition, New York 1989, pp. 396- 491. These references are incorporated herein by reference.

The pressure-sensitive adhesive layers useful in the present invention may comprise further components such as, for example, polymer additives, thickening agents, tackifiers, chain transfer agents and other additives provided that they do not reduce the transparency of the pressure-sensitive adhesive or adversely affect the uniformity of the thickness of the pressure-sensitive adhesive layer to an undesirable and/or unacceptable degree. The amount of such additive preferably is not more than 5 wt. % and more preferably between 0 to 2 wt. % with respect to the mass of the pressure-sensitive adhesive.

Pressure-sensitive adhesives which are useful in the present invention preferably exhibit a modulus G' (measured at a temperature of 23° C and a frequency of 1 radian/second) of between $514^5$ to $214^6$ dyne/cm$^2$, more preferably of between $614^5$ to $1.514^6$ dyne/cm$^2$ and especially preferably of between $6.514^5$ to $9.514^5$ dyne/cm$^2$.

The pressure-sensitive adhesive layer can be prepared by coating the pressure-sensitive adhesive layer as an organic or aqueous solution or casting onto a release liner with subsequent evaporation of the solvent and optional curing, or as an essentially solvent-free, prepolymerized syrup with subsequent curing. The latter method is described in some detail, for example, in US 4,181,752 whereas coating of a solution or dispersion of the pressure-sensitive adhesive is described, for example, in Handbook of Pressure-sensitive Adhesive Technology; D. Satas ed.; Second Edition, New York 1989, pp. 767- 868 (incorporated herein by reference).

The refractive index of the pressure-sensitive adhesive layer preferably is adapted to the average refractive index of the light-transmissive optically clear film. The difference between the average refractive index of the light-transmissive multilayer film and the refractive index of the pressure-sensitive adhesive layer preferably is not more than 0.05 and more preferably less than 0.02. The refractive index of pressure-sensitive adhesives which can be measured, for example, according to ASTM D 542, preferably is at least 1.45 and more preferably at least 1.49. Acrylate-based pressure-sensitive adhesive layers with a refractive index of at least about 1.50 which are useful in the present invention, can be obtained by including a sufficient amount of, for example, phenoxy ethyl acrylate into the polymerizable precursor.

Optically clear films 3 which are useful in the present invention include, for example, polycarbonate, cellulose triacetate and polyolefin-based polymers such as polydicyclopentadiene or a norbornene/dicyclopentadiene/methyl methacrylate terpolymer.

The optically clear film 3 preferably comprises polycarbonate, polyacrylate or polyolefin based polymers.

Optically clear films 3 with the specified values of stiffness or ductility, respectively, are preferred. The tensile test procedures described above are only used, however, to check the mechanical properties of test samples of the optical clear films. Such test samples are not used in the optical storage media of the present invention.

The optically clear film 3 is preferably selected so it is non-tacky at room temperature. Tacky optically clear films 3 may, however, also be useful, for example, if the optical recording medium and, in particular, the DVR according to the present invention is assembled into a cartridge.

Optically clear films 3 which are useful in the present invention can be obtained by polymerization of precursors comprising one or more of monomers including alkyl acrylates the alkyl groups of which have an average of 2 - 24 atoms. The term average of 2 - 24 atoms means that the average number of carbon (C) atoms of the alkyl acrylate compounds is between 4 - 24, preferably between 4- 12 C atoms and especially preferably between 4-10 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 2 to 24 and, in particular, from 2 to 20 carbon atoms. Examples of these lower alkyl acrylates include but are not limited to, methyl acrylate, ethyl acrylate, propyl acrylate, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate, dodecyl acrylate, hexadecyl acrylate, octadecyl acrylate and eicosyl acrylate. Preferred lower acrylate and methacrylate esters include isooctyl acrylate, n-butyl acrylate, 2ethylhexyl acrylate, isononyl acrylate and dodecyl acrylate. Polymerizable monomers or comonomers useful for the preparation of said optically clear film preferably contain up to 5 and, in particular, 1 - 4 alkyl acrylates. The average number of carbon atoms in the alkyl groups of the alkyl acrylates as defined above, preferably is between 2 - 20, preferably between 2 - 12 and very particularly between 2 - 6. Blends of different alkyl acrylates may also be used.

Polymerizable precursors for said optically clear film can furthermore include alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the optically clear film can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene.

The optically clear film or films which are useful in the present invention can be obtained by polymerization of precursors comprising one or more polymerizable precursor including glycerol diacrylate, glycerol triacrylate, ethyleneglycol diacrylate, diethyleneglycol diacrylate, triethyleneglycol dimethacrylate, 1,3-propanediol diacrylate, 1,3-propanediol dimethacrylate, trimethanol triacrylate, 1,2,4-butanetriol trimethylacrylate, 1,4-cyclohexanediol diacrylate, pentaerythritol triacrylate, pentaerythritol tetraacrylate, pentaerythritol tetramethacrylate, sorbitol hexacrylate, bis [1-(2-acryloxy)]p-ethoxyphenyl dimethylmethane, bis[1-(3-acryloxy-2-hydroxy)]-ppropoxyphenyl-dimethyl-methane, tris-hydroxyethyl isocyanurate trimethacrylate, bisacrylates and bis-methacrylates of polyethylene glycols of a molecular weight of 200-500 and/or acrylated oligomers such as those described in US 4,642,126.

The polymerizable precursor of the polymer of the optically clear film may also include film forming materials compatible with the monomer component. Such filmforming materials preferably include polymers reactive with the monomer component, e.g., acrylic functional copolyesters, acrylic functional polyurethaneacrylatecopolymers, dendrimers or acrylate-functional macromers, and also non-reactive polymers which are preferably selected so that they are soluble both in the polymerizable precursor and in the cured precursor, i.e. in the optical clear film. Nonreactive polymers which when blended with the precursor of the optical clear film result in a polymer with a negative $\chi$ ("chi") value are preferred; such non-reactive additives may be selected, for example, from the group of polymers comprising polyalphaolefins, thermoplastic block copolymers, non-reactive acrylic polymers and polyphenylene ethers. Preferred monomers used in the polymerizable precursor include, for example, (methyl)methacrylate, (methyl)ethylacrylate, (methyl)propylacrylate, lower amounts of (methyl) ($C_4$ - C8 alkyl) acrylates, acrylonitrile, methacrylamide, alkyl substituted methacrylamide such as N,N,-dimethylacrylamide, octylacrylamide, N-vinylpyrrolidone, N-vinylcaprolactam or styrene.

The degree of prepolymerization of the polymerizable precursor is preferably chosen as to provide an easily coatable precursor having a viscosity of, for example, between 0.3 and 200 Pa·s at room temperature.

The polymerizable precursor for the optically clear film preferably comprises a monomer component selected from the group comprising (methyl)methacrylate, (methyl)ethylacrylate, (methyl)propylacrylate, lower amounts of (methyl) ($C_4$ - $C_8$ alkyl) acrylates, acrylonitrile, styrene alkyl acrylates, methacrylamides and alkyl substituted methacrylamides, one or more polymerization initiators and optionally one or more vinyl monomers having one or more unsaturated double bonds copolymerizable with the monomer(s) of the polymerizable precursor.

The thickness of the optically clear film or films, respectively, preferably is between 10 and 200 $\mu$m, more preferably between 20 and 150 $\mu$m and especially preferably between 40 and 120 $\mu$m. In more complicated constructions of the optical storage medium of the present invention comprising two or more optical clear films, the thickness of each cover layer preferaby is between 10 and 100 $\mu$m and more preferably between 20 and 90 $\mu$m.

The maximum thickness of the sum of the thicknesses of the optically clear film or films 3 and the pressure-sensitive adhesive layer or layers 2 of the optical storage media of the present invention can be estimated according to EP 0,867,873 and JP 3-225,650 by using a relationship established in JP 3-225,650 for CDs, between such maximum thickness, the numerical aperture of the optical head device of the optical disc recording and/or reproducing apparatus, the wavelength of the light source utilized and the skew margin. When using a laser light source with a wavelength of approximately 0.65 $\mu$m, EP 0,867,873 suggests for the sum of the thicknesses of the optically clear film or films 3 and the pressure-sensitive adhesive layer or layers 2 a value of 288 $\mu$m or less whereas for a blue light laser with a wavelength of 0.4 $\mu$m a value of 177 $\mu$m or less is disclosed.

Release liners 4 are well known in the pressure-sensitive adhesive tape industry and serve to support and protect pressure-sensitive adhesive layers 2 from contamination and to prevent rolls comprising multiple windings of adhesive tape from adhering to each other when the tape is stored in roll form. Release liners 4 commonly comprise papers or polymeric films. These may be treated with adhesion-repellent polymers such as silicones or may comprise such materials that have inherently low adhesion to pressure-sensitive adhesive materials. Non-limiting examples of release liners 4 include silicone coated kraft paper, silicone coated polyethylene coated paper, silicones coated or non-silicone coated base materials such as polyethylene or polypropylene, as well as the afore-mentioned base materials coated with polymeric release agents such as silicone urea, urethanes, and long chain alkyl acrylates, such as defined in U. S. Patent Nos. 3, 957,724; 4,567,073; 4,313,988; 3,997,702; 4,614,667; 5,202,190; and 5,290,615 incorporated herein by reference.

The releasable continuous protective film 5 is preferably selected so that it can be easily removed from the optically clear film 3 without leaving behind any residue. It was found by the present inventors that the releasable continuous protective film 5 is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. The continuous protective films 5 protect the optically clear film 3 for the purpose of handling and transportation. They may consist preferably of polyester, polyethylene, polypropylene or the like. Usually a low release adhesive coating has been applied on the side of the protective film 5, which is in contact with the optically clear film 3 in order to allow easy release of the protective film. Suitable acrylate based removable adhesives which exhibit a low peel adhesion strength and a high cohesive strength which are useful for the preparation of releasable protective films are described, for example, in US 4,166,152 incorporated herein by reference. It is, however, especially preferred that the continuous protective film 5 adheres to the optically clear film 3 without using an additional adhesive layer 2. The adherence of the continuous protective film 5 to the optically clear film 3 without an additional adhesive layer is usually referred to as "clinging" or "cling effect".

The optically clear film 3 preferably is stiff or ductile. As used herein, the term "stiff" means stretch resistant, creep resistant and dimensionally stable. More particularly, the optical clear film preferably has a tensile modulus at room temperature of more than 1,380 MPa (200 kilopounds per square inch), more preferably of more than 2,070 MPa (300 kpsi) and most preferably of more than 2,760 MPa (400 kpsi).

Tensile modulus of the optically clear film 3 is determined according to ASTI Test Method D-822-88 using a 10.2 cm (4 inch) gauge length and a separation rate of 5.1 cm/min (2 inches/min).

The optically clear film 3 preferably has a tensile modulus of less than 1,380 MPa (=200 kpsi) and a tensile elongation at room temperature of greater than 50%, preferably greater than 150%. Tensile modulus and tensile elongation are measured in accordance with ASTI Test Method D-882-88 using a gauge length of 10.2 cm and a separation rate of 12.7 cm/min (5 inches/min). "Tensile elongation" as used herein refers to the elongation at break of the ductile material as measured during the referenced tensile test procedure.

Test Methods

*Determination of radial and tangential deviation*

Polycarbonate optical disc substrates were evaluated before and after lamination of a multilayer film using a Model 126S Optical Disc Tester, available from Dr. Schenk GmbH, Martinsried, Germany. The measurements were always made by incident radiation on the side of the disc opposite to the multilayer film side.
Values determined were:

A. Tangential deviation - both minimum and maximum values of tangential deviation were measured.

B. Radial deviation - both minimum and maximum values of radial deviation were measured.

The four values were measured before lamination and after lamination of the multilayer film and compared to observe changes in each value caused by the lamination process. The changes in the four values are reflected in the data tables 1-3.

*Calculation of tension and elongations*

The experiments described below have been performed using the specific laboratory scale laminator schematically shown in Fig. 3 and described in some detail below.

A. Calculation of the tension ($N/mm^2$) from the tensioning weight 21 (g)

Part 1 Calculation of the tension force (N) from the tensioning weight (g)
Tensioning force in N can be obtained through the equation F = mass x acceleration. The tensioning force is applied, e. g., to the continuous protective film 5 bearing die-cuts of the multilayer film 1.
For example, if a weight of 100 g is applied to the protective film 5, then the tensioning force in Newtons is 0.98 Newtons.

Part 2 Calculation of the tension in $N/mm^2$
The tensioning force (N) is then divided by the cross-sectional area of the protective film 5 (calculated as width (150 mm) times thickness (0.05 mm)). Thus 100 g weight taken above generated a tension of 0.131 N/$mm^2$.

B. Calculation of elongation of the protective film from the tension and the modulus of the film

Elongation ($\gamma$) = change in length of the protective film 5/ original length of the protective film 5 = tension applied to the protective film 5 in $N/mm^2$ ($\sigma$)/elastic modulus of the protective film 5 in $N/mm^2$ (E)

Example:

$$\gamma = \sigma/E = 0.131\ N/mm^2\ /\ 100\ N/mm^2 = 0.0013 = 0.13\ \%$$

Examples

*Example 1*

*Preparation of die-cuts of a multilayer film supported on a continuous protective film*

A polycarbonate film serving as an optically clear film 3 and having a thickness of 70 μm was obtained from Teijin (Osaka, Japan), as PUREACE polycarbonate film. The PUREACE polycarbonate film was obtained as a laminate with a 50 μm protective film comprising a polyolefin. The two films adhered to each other, but could be separated easily without damaging either film.
A layer of an acrylate pressure-sensitive adhesive was prepared separately by UVpolymerizing a syrup of acrylate monomers between two transparent release liners by the method described in US 4,181,752 (Martens et al). The resulting adhesive layer had a thickness of 30 μm.

One release liner was removed from the adhesive layer 2 and the adhesive face thus exposed was laminated to the polycarbonate surface of the polycarbonate 3/polyolefin laminate 5.

The second release liner was then removed from the second acrylate pressure-sensitive adhesive surface.

Rotary die-cutting was performed on the three-layer sheet thus formed in a manner known as kiss-cutting so that the exposed PSA layer 2 and the polycarbonate film 3 were cut through, but the continuous protective polyolefin film 5 remained intact. The circular die-cuts had an outer diameter of 120 mm. A hole was also cut in the center of the die-cut having a diameter of 22 mm. After removal of excess material (weed) surrounding the die-cuts, the adhesive-coated polycarbonate die-cuts (discs) 1 remained supported on the continuous protective film.

A continuous release liner 4 was laminated to cover the surface of the exposed adhesive of the die-cuts.

*Lamination of the die-cuts of the adhesive-coated polycarbonate film to an optical disc substrate*

Aluminum-sputtered polycarbonate DVR circular disc blanks (1.1 mm thickness, 120 mm outer diameter, centered hole having a diameter of 15 mm) bearing no information storage layer 11 were employed. The optical disc substrates were evaluated first prior to lamination for radial and tangential deviation using a Dr. Schenk optical disc tester as described under Test Methods above.

Adhesive-coated die-cuts were laminated to the aluminum-sputtered surface using a laboratory scale device as shown in Figure 3. In general, lamination was conducted by the following procedure:

1. The lamination force was chosen by moving weights 17a, 17b on the lever arm (16) to define a roller load in grams.

2. A lamination angle was set by raising or lower the roller (19).

3. A section of the continuous protective film bearing about ten PSA-coated polycarbonate die-cuts was cut from a larger supply roll.

4. A first end of the section of continuous protective film was stripped of die-cuts and adhered to the lamination table 22 using an auxiliary adhesive tape in a manner such that a adhesive-bearing surface of a die-cut was positioned over the optical disc cavity 10 in the lamination table as shown in Figure 3.

5. A second end of the section of continuous protective film bearing the die-cuts (complete tape 9) was fed over the roller 15 and tension was applied to the tape 6 with a tension application weight (21).

6. The release liner was removed manually from the die-cut located over the cavity.

7. An optical disc substrate was placed in the cavity with the aluminum-sputtered layer facing up. Vacuum was applied to the cavity to hold the disc in place during lamination.

8. The lamination roller 15 was lowered into place pressing the continuous protective film onto the lamination table 22 near the edge of a die-cut.

9. The lamination table was then moved manually at a speed of ca. 30 mm/sec in a manner so that the adhesive-coated side of the die-cut was pressed onto the disc surface, advancing from one side of the disc to the opposite side.

10. The lamination roller was raised and the continuous protective film separated from the polycarbonate surface of the die-cut.

11. The vacuum in the cavity was released and the completed disc was then removed from the cavity.

The laminated disc was then re-evaluated for maximum and minimum values of both radial deviation and tangential deviation. These values were compared to those obtained for the same disc before lamination. The change in the radial deviation and tangential deviation parameters (both maximum and minimum values) shows the influence the lamination process and the presence of the adhesive-coated polycarbonate film on the flatness of the disc.

Specific lamination condition variables were selected for laminating the adhesive-coated polycarbonate film to the disc blanks as shown in Table 1. Table 1 shows the changes in the tangential and radial deviation measurements caused by the lamination.

The results show that the change in radial and tangential deviation were within the values required for high quality DVRs (+/- 0.4 degrees for radial deviation, +/- 0.15 degrees for tangential deviation). A visual inspection of the optical disc substrate 7 after lamination further showed that essentially no air bubbles were included between the Al layer and the PSA layer 2 attached to the polycarbonate layer 3. It can be concluded from this that optical recording media with advantageous properties can be obtained by the method of the present invention although only dummy optical disc substrates 7 bearing no information storage layer 11 were evaluated in the examples 1 - 11.

*Examples 2 - 4*

Example 1 was repeated with the exception that the angle at which the adhesive-coated polycarbonate film was laminated to the Al coated surface of the polycarbonate disc was altered as shown in Table 1.
Test results are also shown in Table 1.

*Example 5*

Example 5 was prepared in a similar manner to Example 1. The lamination force (14.72 N) and the lamination angle (20°) were the same as in Example 1, but the tension placed on the continuous protective film bearing the adhesive-coated polycarbonate film die-cuts was increased to 0.262 N/mm$^2$. The calculated elongation of the continuous protective film was 0.262 %.
Lamination conditions and test results are summarized in Table 1.

*Comparative Example 1*

Comparative Example 1 was prepared using laminating conditions which had a greater influence on the flatness parameters of a disc. The tension placed on the protective film bearing the adhesive-coated polycarbonate film die-cuts during lamination was increased further to 0.654 N/mm$^2$. The calculated elongation of the continuous protective film was 0.654 %.

Table 1

| Examp. | Roller hardness (Shore A) | Lam. force (N) | Tension (N/mm$^2$) | Elongation (%) | Lamination angle (°) | Change Rad min (°) | Change in Rad max(°) | Change in Tan min (°) | Change in tan max(°) |
|---|---|---|---|---|---|---|---|---|---|
| 1 | 40 | 14.72 | 0.131 | 0.131 | 20 | 0.09 | 0.09 | -0.02 | 0.01 |
| 2 | 40 | 14.72 | 0.131 | 0.131 | 5 | 0.03 | 0.10 | -0.09 | 0.08 |
| 3 | 40 | 14.72 | 0.131 | 0.131 | 10 | 0.13 | 0.03 | -0.03 | 0.02 |
| 4 | 40 | 14.72 | 0.131 | 0.131 | 30 | -0.01 | 0.10 | -0.06 | 0.12 |
| 5 | 40 | 14.72 | 0.262 | 0.262 | 20 | 0.14 | 0.06 | -0.02 | 0.01 |
| C1 | 40 | 14.72 | 0.654 | 0.654 | 20 | -0.12 | 0.37 | -0.33 | 0.23 |

*Examples 6 - 8*

Example 1 was repeated with the exception that the lamination force was altered, as compared to Example 1, by both decreasing (Example 6) and increasing (Examples 7 and 8) the lamination force.

Changes in radial deviation and change in tangential deviation caused by the lamination process were still in an acceptable range.

Lamination parameters and effects of lamination on the disc flatness are summarized in Table 2.

*Example 9*

Example 9 was performed by the same procedure as employed for Example 1 with the exception that a rubber-coated roller which generated the lamination force was provided with a rubber coating that was harder than the rubber coating of Example 1. The rubber coating on the lamination roller of Example 9 had a Shore A hardness of 75.

Lamination parameters and effects of lamination on the disc flatness are summarized in Table 2.

Table 2

| Examp. | Roller hardness Shore A) | Lam. force (N) | Tension (N/mm²) | Elongation (%) | Lamination angle (°) | Change Rad min (°) | Change in Rad max(°) | Change in Tan min (°) | Change in Tan max (°) |
|---|---|---|---|---|---|---|---|---|---|
| 6 | 40 | 4.91 | 0.131 | 0.131 | 20 | 0.05 | 0.09 | -0.04 | 0.11 |
| 7 | 40 | 24.53 | 0.131 | 0.131 | 20 | 0.07 | 0.16 | -0.06 | 0.04 |
| 8 | 40 | 34.34 | 0.131 | 0.131 | 20 | 0.15 | 0.17 | -0.10 | 0.07 |
| 9 | 75 | 14.72 | 0.131 | 0.131 | 20 | 0.09 | 0.21 | -0.12 | 0.12 |

*Example 10*

Die-cuts of an adhesive-coated polycarbonate film protected by a continuous protective polyolefin film on the polycarbonate side and a continuous release liner on the adhesive side as prepared in Example 1 were used as a starting material for Example 10. The polyolefin protective film was peeled away and the die-cuts (supported on the continuous release liner) were laminated to another continuous protective film comprising a pressure-sensitive adhesive tape. The adhesive tape comprised a 50μ polypropylene backing and a layer of pressure-sensitive adhesive. The polycarbonate film of the die-cuts was adhered to the adhesive layer of the new protective film. The modulus of the new protective film was measured to be 613 N/mm².

This new construction was used to laminate die-cuts to optical disc substrates in the manner described in Example 1. Lamination conditions and effects of the lamination on disc flatness are shown in Table 3.

This example shows that a higher modulus protective film which has less tendency to stretch under higher tension can also be employed successfully in the invention.

*Example 11*

Example 10 was repeated, with the exception that a third protective film was employed. The third protective film comprised a pressure-sensitive adhesive tape comprising a 64μ cellulose acetate backing and an acrylate-based pressure-sensitive adhesive, commercially available as Magic Tape 811 from 3M Company, St. Paul, MN/USA. The modulus of the protective film was measured to be 2790 N/mm².

This example shows that a higher modulus protective film with less tendency to stretch under higher tension can also be employed successfully in the invention.

Table 3

| Examp. | Roller hardness (Shore A) | Lam. force (N) | Tension (N/mm$^2$) | Elongation (%) | Lamination angle (°) | Change Rad min (°) | Change in Rad max(°) | Change in Tan min (°) | Change in tan max(°) |
|---|---|---|---|---|---|---|---|---|---|
| 10 | 40 | 14.72 | 0.386 | 0.063 | 20 | 0.12 | 0.27 | -0.12 | 0.14 |
| 11 | 40 | 14.72 | 0.542 | 0.019 | 10 | -0.09 | -0.09 | -0.12 | 0.07 |

Compilation of reference numbers

[0137]

| | |
|---|---|
| 1 | light transmitting multilayer film |
| 2 | pressure-sensitive adhesive film |
| 3 | optical clear film |
| 4 | continuous release liner |
| 5 | continuous protective film |
| 6 | tape |
| 7 | base member / optical disc (substrate) |
| 9 | light beam |
| 10 | inner surface |
| 11, 11a, 11b | information storage layer(s) |
| 12 | manual film laminator |
| 13 | fixed laminator stand |
| 14 | optical disk cavity |
| 15 | lamination roller |
| 16 | lever carrying weights 17a, 17b and lamination roller 15 |
| 17a | weight |
| 17b | weight |
| 18 | bearing |
| 19 | lamination angle application roll |
| 20 | lamination angle |
| 21 | tension application weight |
| 22 | lamination table |
| 23 | supply roll for tape 6 |
| 24, 25 | tape guide rollers |
| 26 | tape tensioning mechanism |
| 27 | guide roller |
| 28 | roller for release liner removal |
| 29 | take-up roll for release liner 4 |
| 30 | release liner tensioning mechanism |
| 31 | tape guide roller |
| 32, 33 | tape guide rollers |
| 34 | take-up roll for protective film 5 |
| 35 | tape drive roller |
| 36 | contact roller |
| 37 - 39 | tape guide rollers |
| 40 | protective film tensioning mechanism |
| 41 | tape guide roller |
| 42 | camera system |
| 43 | black panel |
| 44 | optical storage medium |
| 45 | dispensing blade |

| | |
|---|---|
| A | Optical disk substrate 7 loading/unloading position of the lamination table 22 |
| B | Position of lamination table 22 after lamination |

**Claims**

1. A method for preparing an optical storage medium (44) from which information can be read out and/or into which information can be recorded with a light beam (9), said optical storage medium comprising one or more base members (7), one or more information storage layers (11) and at least one-light-transmissive optically clear film (3) wherein such transmissive optically clear films (3) are bonded to each other, to the surface (2) of the base member (7) on which the light beam (9) is incident and/or to one or more of the information storage layers (11) by means of one or more light-transmissive pressure sensitive adhesive layers (2), said method comprising the steps of:

(i) providing at least one base member (7),

(ii) providing a light-transmissive multilayer film (1) comprising a continuous light-transmissive pressure-sensitive adhesive film (2) and a continuous optically clear film (3), the exposed surface of said continuous optically clear film (3) being optionally releasably adhered to a continuous protective film (5) and/or the exposed surface of said light-transmissive pressure-sensitive adhesive film optionally being releasably adhered to a continuous release liner (4),

(iii) optionally removing the continuous release liner (4), and

(iv) laminating the light-transmissive continuous multilayer films (1) to each other, to the surface of the base members (7) on which the light beam (9) is incident and/or to one or more information storage layers (3) whereby the lamination conditions are selected so that the elongation of the multilayer film (1), the continuous release liner (4) and/or the continuous protective film (5) prior to and/or during the lamination is less than 0.6 %, and

(v) cutting said one or more multilayer films (1) so that their shape substantially corresponds to that of said base members (7).

2. A method for preparing an optical storage medium from which information can be read out and/or into which information can be recorded with a light beam, said optical storage medium comprising one or more base members, one or more information storage layers (11) and at least one-light-transmissive optically clear film (3) wherein such transmissive optically clear films (3) are bonded to each other, to the surface (2) of the base member (7) on which the light beam (9) is incident and/or to one or more of the information storage layers (11) by means of one or more light-transmissive pressure sensitive adhesive layers (2), said method comprising the steps of:

(i) providing at least one base member (7),

(ii) providing die-cuts of a light-transmissive multilayer film (1) comprising a light-transmissive pressure-sensitive adhesive film (2) and a light-transmissive optically clear film (3), the optically clear film (3) of said die-cuts being releasably adhered to a continuous protective film (5) and/or the exposed surface of the light-transmissive pressure-sensitive adhesive film (2) being releasably adhered to a continuous release liner (4),

(iii) adjusting the relative position of the die-cuts of the multilayer film (1) with respect to another die-cut of a multilayer film (1), to the surface of the base members (7) on which the light beam (9) is incident and/or to one or more information storage layers (11) of the base member (7),

(iv) optionally removing the continuous release liner (4), and

(v) laminating the individual die-cuts of the light-transmissive multilayer film (1) with their respective pressure-sensitive adhesive surface side to another die-cut of the mulitlayer film (1), to the surface side of the base members (7) on which the light beam (9) is incident and/or to one or more information storage layers (3), whereby the lamination conditions are selected so that the elongation of the multilayer film (1), of the continuous protective film (5) and/or the continuous release liner (4) prior to and/or during the lamination are less than 0.6 %.

3. The method according to any of claims 1 or 2 wherein an information storage layer (11) is attached to the surface of the base member (7) on which the light beam is incident.

4. The method of any of claims 1-3 wherein the elongation of said continuous multilayer film (1), continuous release liner (4) and/or continuous protective film (5) is between 0 % and 0.6 %, preferably between 0.05 % and 0.5% and more preferably between 0.05 % and 0.3 %.

5. The method according to any of claims 1 to 4, wherein the tension of the continuous protective film (5), the continuous release liner (4) and/or of said multilayer film (1) during the lamination is between 0.1 to 10 N/mm$^2$.

6. The method according to any of claims 1 to 5, wherein the lamination angle between the lower surface side of the continuous protective film (5), and the surface onto which said die-cuts are laminated, is between 4° and 90°.

7. The method according to any of claims 1 to 6, wherein the multilayer film (1), the continuous protective film (5) and/or the continuous release liner (4) are subjected during lamination to a lamination force of between 1 N - 200 N.

8. The method according to any of claims 1 to 7, wherein the lamination is performed by passing said multilayer film (1) and/or said continuous protective film (5), respectively, by a rotating lamination roller (15).

9. The method according to claim 8, wherein the lamination roller (15) used has a shore A hardness of between 30 to 80.

10. The method according to any of claims 1 to 9, wherein said individual die-cuts have a shape substantially corresponding to the shape of the base member (7).

11. The method according to any of claims 1 to 10, wherein said continuous protective film (5) is removed during or after lamination.

12. The method according to any of claims 1 to 11, wherein the thickness of said continuous protective film (5) is from about 20 μm to 100 μm.

13. The method according to any of claims 1 to 12, wherein the thickness of said continuous release liner (4) is from about 20 μm to 100 μm.

14. The method according to any one of claims 1 to 13, wherein the thickness of said light-transmissive pressure-sensitive adhesive film (2) used is from about 5 μm to 125 μm, preferably from between 10 μm and 50 μm and more preferably from between 15 μm and 30 μm.

15. The method according to any of claims 1 to 14, wherein the thickness of said optically clear film (3) used is from about 5 μm to 200 μm, preferably from between 50 μm and 120 μm and more preferably from between 70 μm and 90 μm.

16. The method according to any of claims 1 to 15, wherein the base member (7) is releasable fixed during the lamination to a lamination table (22).

17. The method according to any of claims 1 to 16, wherein the lamination table (22) and the lamination roller (15) are moved relative to each other during lamination.

18. The method according to any of claims 1 to 17, wherein the adjustment of the relative position of the die-cuts of the multilayer film (1) with respect to another die-cut of a multilayer film (1), to the surface of the base members (7) on which the light beam (9) is incident and/or to one or more information storage layers (11) of the base members (7), is performed by using an optical means (42), preferably a camera, whereby the output signal of such optical means is processed by a computer system, which positions the lamination table (22) into the exact transversal and/or longitudinal position for an exact placement of the multilayer film (1) or the individual die-cuts of the multilayer film (1), respectively, with respect to the surface such multilayer film (1) or die-cuts, respectively, are to be laminated to.

19. The method according to claims 1 to 18, wherein the base member (7) is releasably fixed to the lamination table (22) by application of vacuum.

20. The method according to claims 1 to 19, wherein the base member (7) is centered on the lamination table (22) by a centering pin.

21. The method according to claims 1 to 20, wherein said lamination table (22) and/or said multilayer film (1) are moved relative to each other at a speed of between 1 mm/sec to 200 mm/sec during the lamination of said multilayer film (1) on said information storage layer (11) of optical disc substrate (7).

22. The method according to claims 1 to 21, wherein said lamination roller (15) and/or said lamination table (22) is suspended by a cardanic device in order to insure an uniform lamination force along the lamination contact line of said lamination roller (15).

23. A laminator (12) comprising:

- a lamination table (22) suitable for receiving a base member (7),
- a supply roll for a continuous multilayer film (1) or die-cuts of such multilayer film (1), respectively, releasably adhered to a continuous protective film (5) and/or to a continuous release liner (4),
- optionally means for removing said continuous release liner (4) prior to lamination,
- a lamination roller (15) to press said multilayer film (1) or said die-cuts onto other die-cuts of said multilayer film, to the surface (2) of the base member (7) on which the light beam (9) is incident and/or to one or more of the information storage layers (11),
- film tension application means (21-39) allowing adjustment of the elongation of said multilayer film (1), said protective film (5) and/or said release liner (4) prior to and/or during the lamination in the range of between 0 and 0.6 %, and
- cutting means for cutting said continuous multilayer film (1) subsequent to lamination substantially to the shape of said base members (7), or means for adjusting the relative position of the die-cuts of the multilayer film (1) prior to the lamination with respect to another die-cut of a multilayer film (1), to the surface of the base members (7) on which the light beam (9) is incident and/or to one or more information storage layers (3).

24. A laminator according to claim 23 wherein the film tension application means comprises a dancer system (26) and/or a friction roller to adjust the tension of the multilayer film (1), the continuous protective film (5) and/or the continuous release line (4).

25. A laminator according to claims 23 - 24 comprising optical means (42, 43) to adjust the lamination table (22) into the exact transversal and/or longitudinal position with respect to said die-cuts of the multilayer film (1).

26. The laminator according to claims 23 - 25 wherein the lamination table (22) has a cavity (14) for receiving the base member, and vacuum means and/or a centering device, preferably a pin, to releasably fix and/or center said base member (7) on said lamination table.

27. The laminator according to claims 23 - 26, wherein the lamination roller (15) has a diameter of between 20 mm to 80 mm.

28. The laminator according to claims 23 - 27, comprising pressure means, weight means, hydraulic means, pneumatic means and/or electric devices to adjust the pressure exerted onto said lamination roller (15) and/or the tension exterted onto the multilayer film (1), the continuous release liner (4) and/or the continuous protective film (5).

29. The laminator according to claims 23 to 28, wherein said release liner (4) is removed from said pressure-sensitive adhesive layer (2) prior to the lamination by release liner removing means (46), preferably by a dispensing blade (45), and subsequently wound upon a roll (29).

30. The laminator according to claims 23 to 29, wherein said continuous protective film (5) is removed from said die-cuts during or subsequent to the lamination by protective film removing means (47), preferably dispensing blade (45) and/or roller means, and subsequently wound upon a roll (34).

Fig. 1

EP 1 316 952 A1

*Fig. 2a*

*Fig. 2b*

Fig. 3

Detail X

Fig. 4

*Fig. 5*

EP 1 316 952 A1

*Fig. 6*

European Patent Office

**EUROPEAN SEARCH REPORT**

Application Number

EP 01 12 8660

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WO 00 77782 A (STEAG HAMATECH AG ;GORDT JOACHIM (DE); ESSER HANS GERD (DE); LIEDT) 21 December 2000 (2000-12-21) * page 2, paragraph 2 - page 3, paragraph 5; figure 2 * * page 5, line 5 - line 6 * * page 5, last paragraph - page 10, paragraph 1; figure 4 * | 23-30 | G11B7/26 B29C63/02 B32B31/20 |
| A | | 1,2 | |
| | --- | | |
| A | US 4 964 934 A (GREGG DAVID P) 23 October 1990 (1990-10-23) * column 6, line 52 - column 7, line 2 * * figure 1 * | 1 | |
| | ----- | | |
| | | | **TECHNICAL FIELDS SEARCHED** (Int.Cl.7) |
| | | | G11B B29C B32B |

The present search report has been drawn up for all claims

| Place of search | Date of completion of the search | Examiner |
|---|---|---|
| THE HAGUE | 22 April 2002 | Lanaspeze, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 12 8660

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2002

| Patent document cited in search report | | Publication date | Patent family member(s) | | Publication date |
|---|---|---|---|---|---|
| WO 0077782 | A | 21-12-2000 | DE | 10029399 A1 | 28-12-2000 |
| | | | DE | 10029398 A1 | 25-01-2001 |
| | | | WO | 0077781 A1 | 21-12-2000 |
| | | | WO | 0077782 A1 | 21-12-2000 |
| | | | EP | 1185982 A1 | 13-03-2002 |
| | | | EP | 1185983 A1 | 13-03-2002 |
| US 4964934 | A | 23-10-1990 | NONE | | |

EPO FORM P0459

For more details about this annex : see Official Journal of the European Patent Office, No. 12/82